# EUROPEAN PATENT SPECIFICATION

(11) **EP 0 554 641 B1**
(45) Date of publication and mention of the grant of the patent: **21.02.1996**
(21) Application number: 92810651.7
(22) Date of filing: 26.08.1992
(51) Int. Cl.: A47L 23/26, A47G 27/02

(54) **Door mat and a method of manufacture thereof**
Türmatte und Verfahren zur Herstellung derselben
Paillasson et son procédé de fabrication

(30) Priority: 07.02.1992 JP 57065/92; 02.06.1992 JP 168399/92
(43) Date of publication of application: 11.08.1993
(73) Proprietor: YUGENGAISYA TOWA, Komaki-shi, Aichi-ken (JP)
(72) Inventor: Nakata, Akira, c/o Yugengaisya Towa, Komaki-shi, Aichi-ken (JP)
(74) Representative: Kügele, Bernhard

(56) References cited:
- GB-A- 1 269 108
- GB-A- 2 214 941
- US-A- 3 837 988
- US-A- 4 351 683
- PATENT ABSTRACTS OF JAPAN vol. 15, no. 377 (C-0870) 24 September 1991 & JP-A-31 51 928 (TOOWA K.K.)

## Description

### BACKGROUND OF THE INVENTION

This invention relates to door mats used for doors of buildings and to a method of manufacture of the door mats, and more particularly to the method in which a molding roll is provided which is formed with concave grooves of optional design pattern on its peripheral surface, and a pattern forming roll is provided which is formed with convex stripes of optional design pattern on its peripheral surface which is disposed in opposition to the molding roll, and a large number of synthetic resin monofilaments are suspended and part of the filaments is accumulated in loop form on the concave grooves formed on the peripheral surface of the molding roll to form an anti-slip layer, and the other part of the monofilaments is received in loop form on the surface of the anti-slip layer and the molding roll to form a reversal surface layer, and the balance of the filaments is received by the water surface lower than the surface of the molding roll to form a surface layer in loop form on the reversal layer, and the anti-slip layer is provided on the reversal layer of the mat by the method of forming the decoration pattern by the convex stripes pattern on the pattern forming roll, and the optional design of decoration pattern is integrally formed on the surface layer.

Heretofore, a variety of products were available such as one provided with an anti-slip mechanism like one produced by laminating a netlike sheet on a floor contacting surface of a lining material of carpet or mat, or one produced by adhering coillike continuous fiber in randum direction on a floor contacting surface of a lining material of carpet or mat, but the foregoing anti-slip mechanism was applied to a preformed carpet or mat in a secondary manner so that the production and fabrication processes became complicated which took longer hours to make. Furthermore, materials, installation for adhesion or fusion or heating means were necessary, which pushed up the costs and the resulting products were not necessarily satisfactory in view of durability of the products.

Also, pattern to be provided on the surface of carpet or mat was applied by knitting or embroidery or dyeing fast or paint, but knitting, embroidery, dyeing fast required technology of high degree and long manufacturing hours which resulted in expensive products which were not suitable for door mats, and there were problems such as peel off the paint and the like.

To begin with, the door mats are easy to move when using them and to provide an anti-slip mechanism is necessary, and also, they are used by being installed at an entrance of a building attracting attention of people and are elements strongly desired of excellence in decorative effects.

GB-A-2.214.941 discloses a mat constructed of two fused layers. Main layer is formed by two or three rows of synthetic monofilaments forming continuous loops and is a three-dimensional aggregation of upright disarranged loop-like synthetic resin filaments. The second layer, formed prior the main layer, is a high density synthetic resin layer formed of a filament loop aggregation having very few or no clearances and having many spaces within the three-dimensional aggregation of the filaments to develop a cushioning property.

US-A-4.351.683 discloses a resilient open fibrous web of inter-engaged coarse continuous kinky filaments, with one flat surface area of increased density. This web is useful for weather-resistant outdoor mats and the smooth face is helpful in assuring good bonding with mastic or adhesive compositions applied thereto.

However, the door mats constructed of synthetic resin monofilaments forming loops were not provided with an anti-slip mechanism and optionally a surface pattern by using means that applied to the foregoing carpet or mat as far as structure was concerned, and therefore, the door mats made of synthetic resin monofilaments provided with an anti-slip mechanism and optionally a pattern on their surfaces had not currently been disclosed. Also, the door mats consisting of construction in which the surfaces thereof were not provided with a pattern but the loop groups only were extremely unattractive and poor in appearance.

The invention is contained in the main claims.

### BRIEF DESCRIPTION OF THE DRAWINGS

FIG. 1 is a structural schematic view of a manufacturing device of door mat;
FIG. 2 is a perspective view of a molding roll in which a pattern of a concave groove is provided on its peripheral surface;
FIG. 3 is a perspective view of a pattern forming roll in which a pattern of convex stripes is provided on its peripheral surface;
FIG. 4 is a perspective view of a door mat in which an anti-slip layer and a surface layer with a pattern are provided;
FIG. 5 is a side view in which part of a door mat of FIG. 4 is enlarged;
FIG. 6 is a perspective view of reversal surface of a door mat of FIG. 4;
FIG. 7 is a cross sectional view in which part showing using condition of a door mat of FIG. 4 is enlarged;
FIG. 8 is a perspective view of a door mat in which its peripheral surface is provided by using a flat molding roll, and the reversal surface of the door mat becomes flat and a pattern is formed only on the surface layer of the door mat; and
FIG. 9 is a perspective view of a complete product of a door mat by providing a hemming on a peripheral edge of a door mat of FIG. 8.

### DETAILED DESCRIPTION OF THE INVENTION

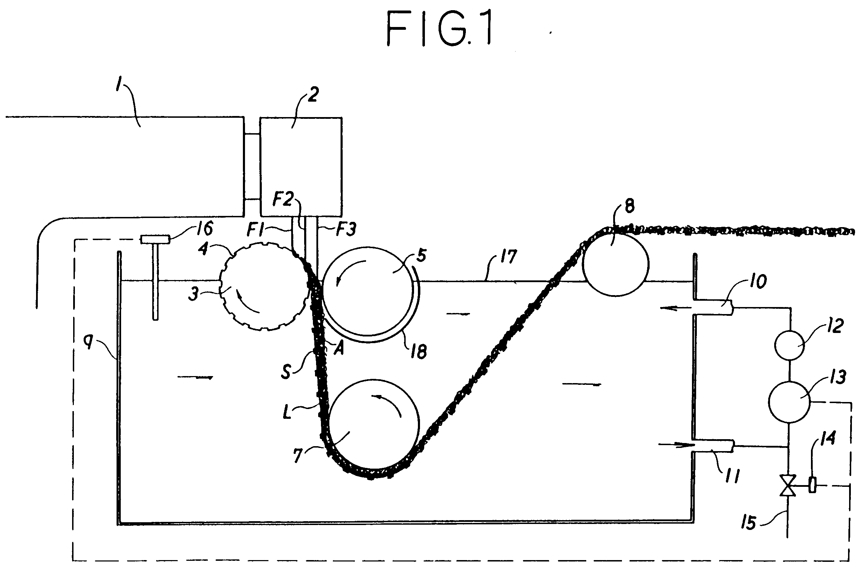

In FIG. 1, reference numeral 1 denotes an extruder that extrudes soft vinyl chloride resin by fusing thereof, and a spinning pack 2 is connected to its tip, and nozzles (not shown) are arranged in three rows on the lower part of the spinning pack 2, and filaments F1 - F3 of the monofilaments spun from these nozzles suspend perpendicularly.

The row of these monofilaments are such that the F1 toward the front forms an anti-slip layer S of the door mat, and the center F2 forms a reversal layer L of the door mat, and the F3 toward the rear forms a surface layer A of the door mat.

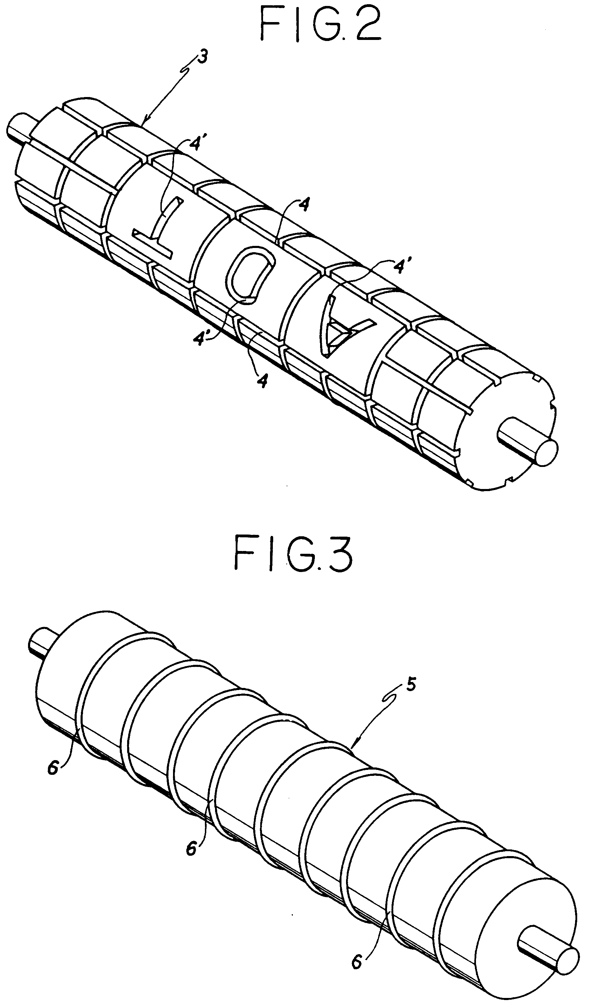

Reference numeral 3 denotes a molding roll forming loops of F1 - F3 of the rows of each monofilament and the molding roll is formed by providing concave groove 4 of lattice type or concave groove 4' of English letter and the like on its peripheral surface as shown in FIG. 2, and being disposed in the lower part of the spinning pack 2 and being rotated in an arrow direction.

Reference numeral 5 denotes a pattern forming roll disposed in opposition to the molding roll 3 as shown in FIG. 1 which rotates in an arrow direction, and the pattern forming roll is provided with projecting stripe on its peripheral surface as shown in FIG. 3. This pattern forming roll 5 has a construction that an axial distance with the molding roll 3 is adjusted according to the projecting stripes 6.

Reference numeral 7 denotes a guide roll of the door mat to be fed from a pair of the molding roll 3 and the pattern forming roll 5, and being positioned to shift the door mat in perpendicular direction, and being rotated in an arrow direction as shown in FIG. 1. Reference numeral 8 denotes a feeding roll.

Reference numeral 9 denotes a cooling water tank that accommodates the pattern forming roll 5 and the guide roll 7, and cooling water holding a fixed temperature (50 - 60°C) in its inside. The temperature of the cooling water forms loop groups whose temperature is set to temperature of degree that gradually cools the monofilaments to be spun from the nozzles of the spinning pack 2 so that the monofilaments F1 - F3 are not rapidly cooled and are rather gradually cooled. Also, an outflow pipe 10 communicating with the inside is provided on the upper part of one side wall of the cooling water tank 9, and an inflow pipe 11 is similarly provided on the lower part thereof. These outflow pipe 10 and the inflow pipe 11 are connected by means of a circulation pump 12 and a water heater 13, and a water supply pipe 15 provided with a cold water supply valve 14 is connected to the rear part of the water heater 13.

Reference numeral 16 denotes a water temperature adjusting meter disposed at the other side of the cooling water tank 9 by a detecting unit of its lower end being impregnated in the water, and being connected to the water heater 13 and the cooling water supply valve 14 electrically. For example, when temperature of the cooling water becomes lower than a predetermined temperature, a signal is transmitted to the water heater 13 from the water temperature adjusting meter 16, and the water heater 13 generates heat, and at the same time, operates the circulation pump 12 to suck the water in the cooling water tank 9 from the inflow pipe 11 disposed at its lower part, and it is made to pass through the water heater 13 and the water heated to a predetermined temperature is made to outflow from the outflow pipe 10 disposed at its upper part. However, in this case, the cold water supply valve 14 is closed.

Also, when temperature of the cooling water becomes higher than a predetermined temperature, a signal is transmitted to the cold water supply valve 14 from the water temperature adjusting meter 16, and the cold water supply valve 14 is released, and at the same time, operates the circulation pump 12 and the cold water fed from the water supply pipe 15 is made to outflow from the outflow pipe 10. In this case, the heat source of the water heater 13 is turned off. As described in the foregoing, temperature of the water in the cooling water tank 9 is kept almost always constant. By the way, the water surface 17 of the cooling water is adjusted to be a predetermined height in the lower part of the nozzle surface.

Furthermore, a convection restraint cover 18 is provided along a peripheral surface of the pattern forming roll 5 to cover a portion from the submerged cooling water to the part slightly higher than the water surface 17. This convection restraint cover 18 protects the temperature of the pattern forming roll 5 from rapidly cooling by the cooling water to mold the decoration pattern D positively.

Among the row of the monofilaments to be fed from the spinning pack 2, the F1 suspends and reaches the surface of the molding roll 3 and forms the continuous loop L1 of small ring type and accumulates in the concave groove 4 or concave groove 4' of English letter and the like provided on the peripheral surface of the molding roll 3, and the adjacent loops fuse at the respective intersection, and forms an anti-slit layer S forming a lattice shape as a whole according to the rotation of the molding roll 3.

The row of the monofilaments F2 suspend on the entire surface of the molding roll 3 including the anti-slip layer S formed by the foregoing matter to form the loop L2, and the intersection of the loop L2 and the loop L1 of the anti-slip layer S are fused, and the intersection of each loop L2 of the monofilaments F2 is fused to form a reversal layer L and is shifted to the water surface 17 according to the rotation of the molding roll 3 in the condition where the fusing at high temperature is possible.

On the other hand, a loop L3 lattice is formed whose lattice is larger than those of the loops L1 and L2 formed by the rows of the monofilaments F1 and F2 suspended over the water surface 17, and these loops L3 superpose over the loop 12 of the reversal surface layer L, and a surface layer A of the door mat is formed by fusing at the mutual intersections, and the surface of the surface layer A is extruded to the pattern forming roll 5 and the decoration pattern D is formed by the projecting stripe 6 provided on the peripheral surface of the pattern forming roll 5.

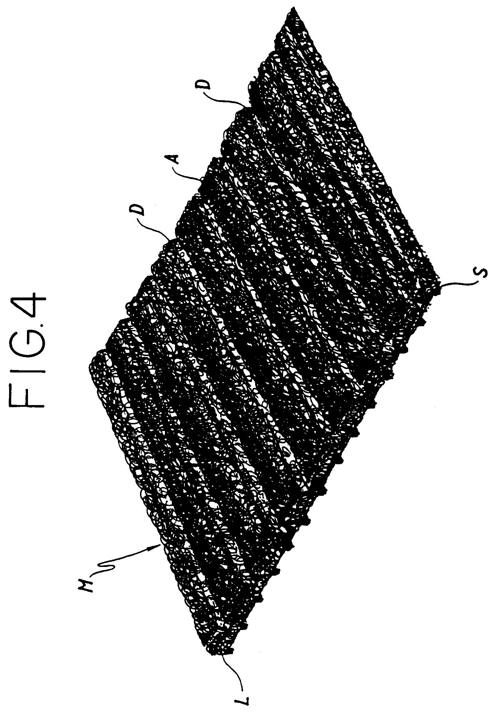

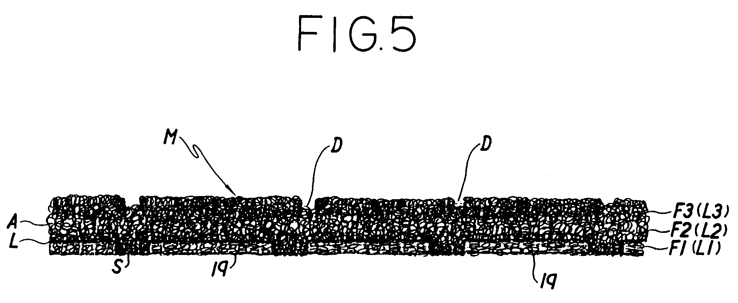

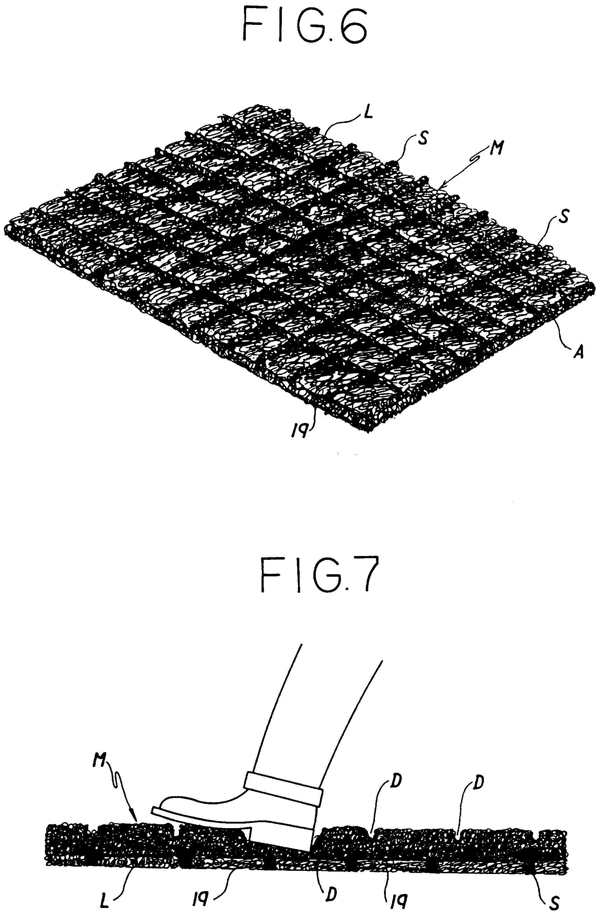

The door mat is transferred straight into the water, and the loops L3 of the surface layer A is gradually cooled in the water and is deformed and is stabilized to become a three dimensional complicated curve form, and the door mats M of the shape shown in FIGs 4 through 6 are produced.

As shown in these drawings, the size of the loops L1 - L3 to be formed by the rows F1 - F3 of each monofilament is such that the loop diameter becomes smaller in proportion to the length of perpendicular distance to reaching the molding roll 3 forming the curved surface, and accordingly, the loop diameter L1 of the anti-slip layer S is a minimum, and the reversal surface layer L forms the loop diameter L larger than the anti-slip layer S. Furthermore, the perpendicular distance of the F3 forming the surface layer A is down to the water surface 17 which is the longest, and thus, the maximum loop diameter is formed.

Different structural door mats can be produced by merely changing the mounting height of the molding roll 3 or the height of the water surface 17 which changes the size or the shape of the loop diameters L1 - L3 or easily changes rising angle of the loop L3 of the surface layer A.

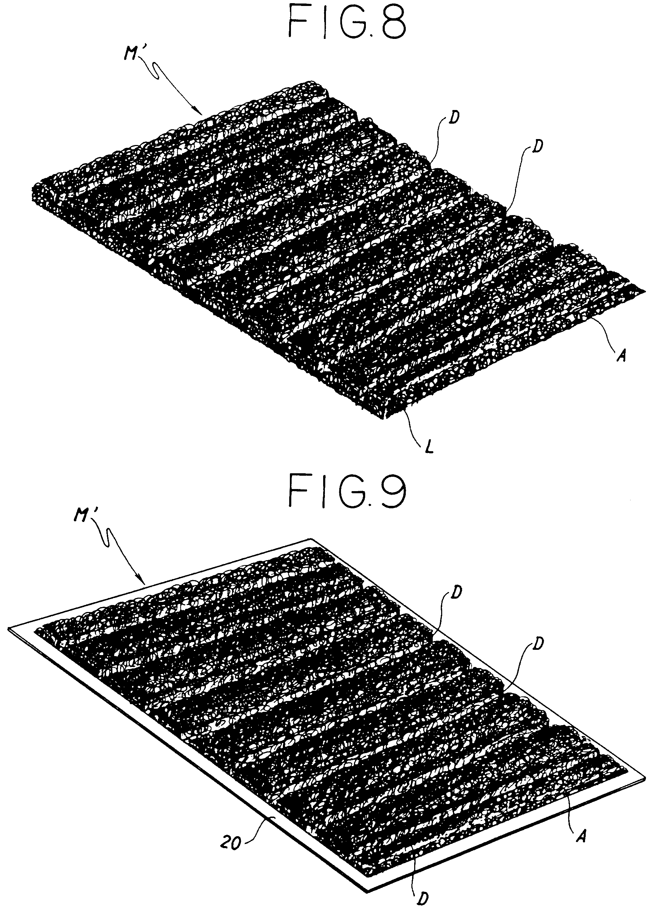

The door mat M produces a novel beauty as the surface layer A forms the three dimensional curve as shown in FIG. 4, and forms a decoration pattern D of an optional concavo-convex design on its surface. Also, a non-skidding function of a boot sole is increased as shown in FIG. 7 due to the formation of the concavo-convex pattern, and the concave pattern portion positively seizes a large amount of mud and increases the mud removing function. Furthermore, since a space portion 19 is formed between the reversal layer L and the anti-slip layer S, the seizing performance of the mud is excellent with favorable cushion properties, and the seized mud passes the reversal layer L to drop, and stays upon dropping into the inside of the anti-slip layer S showing a measure of the lattice shape, and also, the mud is not scattered to the outside of the door mat as the mud clogged due to the formation of a barrage by the lattice, and as a result, the mud keeps the surrounding clean.

The molding roll 3 and the pattern forming roll 5 are exchangeably provided in the cooling water tank 9, and the optional rolls 3 and 5 may be chosen and exchanged from the rolls 3 and 5 having a variety of design patterns, whereby the door mat having a pattern of the anti-slip layer or the surface layer having desired design patterns can be obtained.

Also, in case of producing the door mat without the anti-slip layer, the molding roll 3 having the concave groove 4 on its peripheral surface as shown in FIG. 2 is replaced with the use of the molding roll (not shown) forming a flat on its peripheral surface, the door mat M' as shown in FIG. 8 can be produced in which an optional design of a decoration pattern D is formed on only the surface layer A, and the reversal surface layer does not have the anti-slip layer S. By the way, FIG. 9 shows the product as a commodity completed by hemming the periperal edge of the door mat M' shown in FIG. 8.

Furthermore, in case of producing the mat (not shown) in which the anti-slip layer S is provided, and a decoration pattern D is not provided on the surface layer A, the molding roll 3 having the concave groove 4 on its peripheral surface shown in FIG. 2 is used, and in lieu of the pattern forming roll S, the pressing roll (not shown) whose peripheral surface is flat is used. This pressing roll has functions so that it applies the pressure to the loop group on the molding roll 3 and the anti-slip layer S is efficiently formed.

The door mat of this invention provides a softness and elasticity by the interval between the loop group of the surface layer and the reversal surface layer and the anti-slip layer, which gives a comfortable feeling to the user when walking, and yet, collects the mud. Moreover, the surface layer, reversal surface layer and the anti-slip layer are integrally formed whereby the good slip effect of durable type sustains.

The door mat according to this invention provides a novel decorative beauty by the decorative pattern formed on the loop groups of the surface layer.

Also, the door mat according to this invention retains a capacity of deforming from linearity to curve by the viscous elasticity that matches the stress within a time till cooling and solidification on account of the molten monofilaments extruded from the nozzles being given with complicated internal stress. Also, the door mat according to this invention in which the surface layer, reversal surface layer and anti-slip layer of the door mat are molded by different methods according to the required performance by taking advantage of physical properties of the foregoing macromolecules.

The mud removed from the shoes when using precipitates from gaps of the loop groups of the surface layer and the reversal layer of the door mat and is collected without being scattered outside of the anti-slip layer forming the lattice, whereby the mud can be simply removed by turning up the door mat, providing an efficiency in workability of the cleaning.

Accordingly, the door mat according to this invention has excellent seizure of mud and transmitting precipitation on account of a compound structure of the surface layer, reversal surface layer and anti-slip layer in which the size or the shape of the loops constituting the monofilaments is different, making the mud having transmitted and precipitated to stay in the anti-slip layer forming the lattice without scattering outside, and as a result, keeping the surrounding clean. Moreover, the stayed mud can be easily removed by turning up the door mat, and the mud adhered to the door mat can be easily removed by beating the door mat or simply washing it with water whereby it can be used in always clean condition.

Moreover, the door mat according to this invention increases a mud removing function and safety by the optional design of decorative pattern to be formed on the loop group of the surface layer. Yet, the decorative beauty that cannot be found in the conventional door mat can be brought about, and when used at an entrance of a building and the like that attracts the eyes of people, an additional value that is a beauty to the practical value can be demonstrated.

Furthermore, the surface layer, reversal surface layer and the anti-slip layer can be integrally and continuously formed whereby the productivity is high and the cost of production is low, and the door mat is of an integral structure which is superior in the strength which prevents positively the slippage, and can be used with a safety for a long period of time.

The cushion property of the door mat according to this invention is excellent since a space portion is formed between the reversal surface of the door mat and the anti-slip layer.

By selecting the molding roll, the anti-slip layer may be provided on the reversal surface of the door mat of this invention or may not be provided so that the structure of the surface layer and the reversal surface layer can be chosen according to the location where the door mat is used.

These door mats can be produced efficiently, and yet, they are of the integral structure, their strengths are excellent.

## Claims

1. A door mat constructed of layers of synthetic monofilaments, characterized in that it comprises:
- a surface layer (A) formed by a row of synthetic resin monofilaments (F3) forming loops (L3),
- a reversal layer (L) formed on the undersurface of the surface layer (A) by a row of synthetic resin monofilaments (F2) forming loops (L2),
- an anti-slip layer (S) formed in lattice form on the undersurface of the reversal layer (L) by a row of synthetic monofilaments (F1) forming loops (L1),
those layers (A, L, S) being formed integrally.

2. A door mat according to claim 1, characterized in that the surface layer (A) is provided with a decoration pattern (D) of an optional concavo-convex design.

3. A door mat according to claims 1 or 2, characterized in that the diameter of the loops (L1) of the anti-slip layer (S) is a minimum, the diameter of the loops (L2) of the reversal layer (L) is larger than the diameter of the loops (L1) of the anti-slip layer and the diameter of the loops (L3) of the surface layer (A) is a maximum.

4. A method of manufacture of a door mat according to claim 1, comprising:
- installing a cooling water tank (9) in the lower part of an extruder (1) provided with a spinning pack (2) in which three rows of nozzles are arranged by shifting positions mutually,
- installing a molding roll (3) and a pressing roll (5) with flat peripheral surface in opposition in the cooling water tank (9),
- covering the part of a peripherical surface of the pressing roll (5) with a convection restraint cover,
- suspending monofilaments from each nozzle,
- forming the anti-slip layer (S) according to the rotation of the molding roll (3) by causing the front row of the monofilaments (F1) to collect in loop form in concave grooves (4) in lattice form provided on the peripherical surface of the molding roll (3),
- forming the reversal surface layer (L) on the anti-slip layer (S) by causing the central row of the monofilaments (F2) to collect in loop form on the anti-slip layer (S) and on the surface of the molding roll (3),
- forming the surface layer (A) on the reversal surface layer (L) by causing the rear row of the monofilaments (F3) to collect in loop form on the water surface lower than the surface of the molding roll (3),
- fusing and bonding each layer at intersections mutually whereby the integrated door mat is produced.

5. A method of manufacture according to claim 4, wherein a pattern forming roll, is used in lieu of the pressing roll (5) and forming a decorative pattern on the surface of the surface layer (A), the pattern forming roll (5) being provided with a design pattern of convex stripes on its peripherical surface.

## Patentansprüche

1. Türmatte, welche aus Schichten aus synthetischen Monofilamenten aufgebaut ist, und welche dadurch gekennzeichnet ist, daß sie folgendes aufweist:
- eine Oberflächenschicht (A), die aus einer Reihe von Schlaufen (L3) bildenden Monofilamenten (F3) aus einem synthetischen Harz,
- eine Rückenschicht (L), die an der Unterseite der Oberflächenschicht (A) durch eine Reihe von Schlaufen (L2) bildenden Monofilamenten (F2) aus einem synthetischen Harz ausgebildet ist,
- eine Gleitschutzschicht (S), die in Gitterform an der Unterseite der Rückenschicht (L) durch eine Reihe von Schlaufen (L1) bildenden synthetischen Monofilamenten (F1) ausgebildet ist,
wobei diese Schichten (A, L, S) einteilig ausgeführt sind.

2. Türmatte nach Anspruch 1, dadurch gekennzeichnet, daß die Oberflächenschicht mit einem Dekormuster (D), gegebenenfalls mit einer konkav-konvexen Ausbildung, versehen ist.

3. Türmatte nach Anspruch 1 oder 2, dadurch gekennzeichnet, daß der Durchmesser der Schlaufen (L1) der Gleitschutzschicht (S) ein Minimum ist, der Durchmesser der Schlaufen (L2) der Rückenschicht (L) größer als der Durchmesser der Schlaufen (L1) der Gleitschutzschicht ist und der Durchmesser der Schlaufen (L3) der Oberflächenschicht (A) am größten ist.

4. Verfahren zur Herstellung einer Türmatte nach Anspruch 1, welches folgendes umfaßt:
- Aufstellen eines Kühlwassertanks (9) am unteren Teil eines mit einem Spinnsatz (2) mit drei Düsenreihen mit gegenseitig verschobener Lage versehenen Extruders (1),
- Aufstellen einer Formwalze (3) und einer Druckwalze (5) mit glatter Umfangsfläche, welche in dem Kühlwassertank (9) einander gegenüberliegen,
- Abdecken eines Teiles der Umfangsfläche der Druckwalze (5) mit einer die Konvektionsströmung abhaltenden Abdeckung,
- Herunterführen von Monofilamenten aus jeder Düse,
- Bilden der Gleitschutzschicht (S) entsprechend der Umdrehung der Formwalze (3) durch Ansammelnlassen der Frontreihe der Monofilamente (F1) in Schlaufenform in konkaven Nuten (4), die in Gitterform an der Umfangsfläche der Formwalze (3) vorgesehen sind,
- Bilden der Rückenschicht (L) auf der Gleitschutzschicht (S) durch Ansammelnlassen der mittleren Reihe der Monofilamente (F2) in Schlaufenform auf der Gleitschutzschicht (S) und an der Oberfläche der Formwalze (3),
- Bilden der Oberflächenschicht (A) auf der Rückenschicht (L) durch Ansammelnlassen der hinteren Reihe der Monofilamente (F3) in Schlaufenform auf der Wasserfläche unterhalb einer Fläche der Formwalze (3),
- Verschmelzen und Binden jeder Schicht an den gegenseitigen Schnittstellen, wodurch die einteilige Türmatte erzeugt wird.

5. Verfahren zur Herstellung nach Anspruch 4, bei dem eine Musterbildungswalze an Stelle der Druckwalze (5) angewandt und ein Dekormuster an der Oberfläche der Oberflächenschicht (A) gebildet wird, wobei die Musterbildungswalze (5) an ihrer Umfangsfläche mit einem Designmuster von konvexen Streifen versehen ist.

## Revendications

1. Paillasson constitué de couches de monofilaments synthétiques, caractérisé en ce qu'il comprend:
- une couche superficielle (A) formée par une rangée de monofilaments en résine synthétique (F3) formant des boucles (L3),
- une couche réversible (L) formée sur la surface inférieure de la couche superficielle (A) par une rangée de monofilaments en résine synthétique (F2) formant des boucles (L2),
- une couche anti-dérapage (S) formée en réseau sur la surface inférieure de la couche réversible (L) par une rangée de monofilaments synthétiques (F1) formant des boucles (L1),
ces couches (A, L, S) étant formées en une pièce.

2. Paillasson selon la revendication 1, caractérisé en ce que la couche superficielle (A) comporte un motif décoratif (D) ayant une réalisation concavo-convexe en option.

3. Paillasson selon les revendications 1 ou 2, caractérisé en ce que le diamètre des boucles (L1) de la couche anti-dérapage (S) est minimum, le diamètre des boucles (L2) de la couche réversible (L) est supérieur à celui des boucles (L1) de la couche anti-dérapage et le diamètre des boucles (L3) de la couche superficielle (A) est maximum.

4. Procédé de fabrication d'un paillasson selon la revendication 1, comprenant les étapes consistant à :
- installer un réservoir d' eau de refroidissement (9) dans la partie inférieure d'une extrudeuse (1) munie d'un ensemble de filature (2) dans lequel trois rangées d'ajutages sont disposées par décalage mutuel des positions,
- installer un rouleau de moulage (3) et un rouleau de compression (5) avec une surface périphérique plate en opposition l'un à l'autre dans le réservoir d'eau de refroidissement (9),
- recouvrir la partie d'une surface périphérique du rouleau de compression (5) avec un couvercle limitant la convexion,
- mettre en suspension des monofilaments provenant de chaque ajutage,
- former la couche anti-dérapage (S) conformément à la rotation du rouleau de moulage (3) en amenant la rangée avant des monofilaments (F1) à se rassembler sous forme de boucle dans des rainures concaves (4) en forme de réseau fournies sur la surface périphérique du rouleau de moulage (3),
- former la couche (L) de la surface réversible sur la couche anti-dérapage (S) en amenant la rangée centrale des monofilaments (F2) à se rassembler sous forme de boucle sur la couche anti-dérapage (S) et sur la surface du rouleau de moulage (3),
- former la couche superficielle (A) sur la couche (L) de la surface réversible en amenant la rangée arrière des monofilaments (F3) à se rassembler sous forme de boucle sur la surface de l'eau plus basse que la surface du rouleau de moulage (3),
- fondre et lier chaque couche aux intersections mutuelles, d'où la production d'un paillasson intégré.

5. Procédé de fabrication selon la revendication 4, dans lequel un rouleau formant un motif est utilisé à la place du rouleau de compression (5) et où il y a formation d'un motif décoratif sur la surface de la couche superficielle (A), le rouleau de formation de motif (5) étant muni d'un motif de bandes convexes sur sa surface périphérique.
